# EUROPÄISCHE PATENTANMELDUNG

(11) **EP 1 441 049 A1**
(43) Veröffentlichungstag der Anmeldung: **28.07.2004**
(21) Anmeldenummer: 03028017.6
(22) Anmeldetag: 06.12.2003
(51) Int. Cl.: C25F 3/08

(54) **Verfahren zur Herstellung von Formteilen aus Niob oder Tantal durch elektrochemisches Ätzen**

(30) Priorität: 20.12.2002 DE 10259934
(71) Anmelder: H.C. Starck GmbH, 38642 Goslar (DE)
(72) Erfinder: Gottschling, Marianne, 38640 Goslar (DE); Löffelholz, Josua Dr., 38685 Langelsheim (DE); Albert, Mathias Dr., 01219 Dresden (DE); Sadowski, Günter Dr., 01445 Radebeul (DE)
(74) Vertreter: Zobel, Manfred, Dr.

(57) **Zusammenfassung**

Verfahren zur Herstellung von Formteilen aus Niob oder Tantal durch elektrochemisches Ätzen eines mit einer strukturierten Photolackmaske überzogenen Nioboder Tantalbleches in einer Flusssäure enthaltenden wässrigen Ätzlösung, wobei das Ätzen unter elektrochemischen Bedingungen erfolgt, bei denen der Ätzstrom von starkem Rauschen überlagert ist und die Ätzlösung ein wasserlösliches Polymer enthält.

## Beschreibung

Die Erfindung betrifft ein Verfahren zur Herstellung von Formteilen aus Niob oder Tantal durch anodisches Ätzen der mit einer strukturierten Photolackmaske bedeckten Metalle in einer Flusssäure enthaltenden wässrigen Ätzlösung und so erhältliche Formteile.

Bei der Herstellung von Kondensatoren werden vielfach Anoden auf Basis von Niob oder Tantal eingesetzt. Diese bestehen oftmals aus speziell geformten Blechen aus den genannten Metallen, auf die beispielsweise mittels Siebdruck eine Niobpulveroder Tantalpulver-haltige Paste aufgebracht wird. Die Paste wird anschließend einem Sinterschritt unterzogen, wobei ein Sinterkörper ausgebildet wird, der fest mit dem Formteil aus Niob oder Tantal verbunden ist.

Die benötigten Formteile aus Niob oder Tantal können beispielsweise aus Niob- oder Tantalblechen geeigneter Stärke herausgeätzt werden.

Es ist bekannt, dass sich Niob und Tantal sowohl durch Plasmaverfahren und andere physikalische Verfahren, als auch nasschemisch ätzen lassen. Die Ätzraten sind bei den physikalischen Verfahren aber sehr niedrig. Strukturen von mehreren 10 µm Dicke, wie sie für die Herstellung von Formteilen erforderlich sind, lassen sich daher in vertretbaren Zeiten mit diesen Verfahren nicht herstellen. Als weiterer Nachteil sind die hohen Kosten für die Ausrüstungen und den Betrieb von Anlagen zu nennen, wie sie für die Durchführung physikalischer Ätzverfahren benötigt werden.

Zum Ätzen von Formteilen aus Niob oder Tantal sind deshalb nur nasschemische Verfahren wirtschaftlich sinnvoll einsetzbar. Dabei kommen sowohl rein chemische, als auch elektrochemische Verfahren in Betracht. Auf die zu ätzende Niob- oder Tantalschicht wird vor dem Ätzvorgang ein photosensitiver Lack, ein sogenannter Photolack oder Photoresist, aufgebracht. Durch geeignete Belichtung kann der Photolack anschließend strukturiert werden. Der Photolack kann dann an den Stellen, an denen der Ätzvorgang erfolgen soll, beispielsweise durch Auswaschen entfernt werden, so dass die darunterliegende Niob- oder Tantalschicht an diesen Stellen mit einer Ätzlösung in Kontakt kommen kann. Die Bereiche der Niob- oder Tantalschicht, an denen der Photolack nicht entfernt wird, sind durch diesen Überzug vor einem Angriff durch die Ätzlösung geschützt.

Es sind auch Verfahren bekannt, bei denen keine Maske aus einem Photolack erzeugt werden muss, wie das ECM (electrochemical machining) und die entsprechende Mikromethode, das EMM (elektrochemical micromachining). Bei diesen Verfahren wird die selektive Auflösung an vorgegebenen Stellen des Werkstücks durch die sehr enge Annäherung einer entsprechend geformten Kathode an das Werkstück erreicht. Im Spalt von einigen 10 µm Dicke zwischen Werkstück und Kathode lassen sich durch intensives Anströmen des Ätzmittels sehr hohe Stromdichten und entsprechend auch hohe Ätzraten erreichen und nahezu senkrechte Ätzkanten herstellen. Voraussetzung ist die Verfügbarkeit geeigneter Werkzeuge in Form von Kathoden, die für die beschriebene Anwendung extrem ätzbeständig sein müssen. Die Herstellung derartiger Werkzeuge ist als Einzelanfertigung aus teuren Werkstoffen sehr kostenintensiv. Das trifft auch auf die erforderliche Vorrichtung zu, die die notwendige intensive Strömung erzeugt.

Zur stromlosen nasschemischen Ätzung von Niob und Tantal werden meist Mischungen von Flusssäure oder Fluoriden mit anderen Säuren und oxidierenden Zusätzen, vorwiegend Salpetersäure, beschrieben. Das Oxidationsmittel hat dabei unter anderem die Aufgabe, die Entstehung von gasförmigem Wasserstoff zu verhindern, der die Haftung einer Maske aus einem Photoresist (Photolack) auf dem Metall verschlechtern kann.

Die Metalle Niob und Tantal weisen eine dichte, fest haftende, chemisch sehr inerte Oxidschicht auf und sind deshalb in den gebräuchlichen Säuren, mit Ausnahme von Flusssäure unlöslich. Die Oxidschicht verhindert auch die reproduzierbare Einstellung elektrochemischer Potenziale, so dass in der Literatur sehr unterschiedliche Angaben zu finden sind. Normalpotenziale, die aus thermodynamischen Daten abgeschätzt wurden, liegen aber für Niob und Tantal im deutlich negativen Bereich nahe -1 V. Diese Metalle können daher ohne Zusatz von Oxidationsmitteln rein chemisch in Flusssäure gelöst werden, wobei aber die auftretende Überspannung des entstehenden Wasserstoffs die Auflösung und damit einen chemischen Ätzvorgang verzögert.

Das chemische Ätzen von Niob oder Tantal wird daher in der Regel nur dann angewandt, wenn die Dicke der zu ätzenden Schicht lediglich wenige Mikrometer beträgt. Solch dünne Schichten können noch in vertretbarer Zeit durchgeätzt werden. Es genügen Ätzzeiten von wenigen Sekunden, so dass übliche Photolacke, die in der Regel auf die zu ätzenden Niob- oder Tantalschichten aufgebracht werden, nicht angegriffen werden.

In US-A-4,266,008 wird die Herstellung von supraleitenden Schaltkreisen beschrieben. Hierzu wird auf dünne Niob-Filme einer Dicke von 0,5 bis 5 µm eine Maske aus photosensitivem Material aufgebracht und der Niob-Film anschließend an den Stellen, die nicht mit dem Material bedeckt sind mittels einer wässrigen Ätzlösung geätzt. Die Ätzlösung enthält 8,5 bis 9 Gew.-% Salpetersäure, 11,5 bis 12 Gew.-% Schwefelsäure und 12,25 bis 12,75 Gew.-% Flusssäure. Eine 0,5 µm dicke Niob-Schicht konnte mit dieser Ätzlösung in 10 s durchgeätzt werden.

Auch aus JP 56081680 A ist ein Verfahren zum Ätzen von Niob bekannt. Es wird ein Gemisch aus 5 bis 15 Gew.-% HF, 2 bis 6 Gew.-% NH₄F, 10 bis 20 Gew.-% HCl und 3 bis 9 Gew.-% HNO₃ vorgeschlagen.

M. Köhler beschreibt in "Ätzverfahren für die Mikrotechnik, WILEY-VCH-Verlag, 1998, S. 306" ein Ätzbad der Zusammensetzung 0,66 mol/l (NH₄)₂S₂O₈, 0,27 mol/l NH₄F, 0,11 mol/l Zitronensäure und 1,43 mol/l HNO₃. Der Ätzvorgang wird bei einer Temperatur von 50°C durchgeführt.

In "Metallographisches, keramographisches, plastographisches Ätzen, Gebr. Borntraeger Verlag, 6. Auflage, Stuttgart 1994, S. 99" macht G. Petzow Angaben zur Mikroätzung von Niob und seinen Legierungen mit einer Ätzlösung, die keine Fluor-Verbindung enthält. Die Ätzlösung besteht aus einer Mischung von gleichen Teilen Wasser, Wasserstoffperoxid 30 Gew.-%ig und Ammoniaklösung 32 Gew.-%ig, und soll bei Siedetemperatur verwendet werden. Da eine solche Mischung nur kurze Zeit beständig ist, insbesondere bei Siedehitze, kommt sie für die Herstellung von Formteilen aus Niob und Tantal mittels Ätzen nicht in Frage.

Außer mit Flusssäure lassen sich die beiden Metalle Niob und Tantal auch mit stark alkalischen Lösungen ätzen, gegen die aber alle bekannten Photolacke nicht genügend stabil sind. Deshalb kommen alkalische Ätzmittel für das Formteilätzen nicht in Betracht. Wegen der erkennbaren Schwierigkeiten durch die hohen Säurekonzentrationen und die Notwendigkeit Oxidationsmittel zuzusetzen, sind die rein chemischen Methoden zur Herstellung von Formteilen aus Niob und Tantal wenig erfolgversprechend.

Bei der elektrochemischen Ätzung sind prinzipiell keine Oxidationsmittel erforderlich. Dennoch gibt G. Petzow in "Metallographisches, keramographisches, plastographisches Ätzen, Gebr. Borntraeger Verlag, 6. Auflage, Stuttgart 1994, S. 99" für einen solchen Prozess eine Mischung von 17 Teilen 65 Gew.-%iger HNO₃, 17 Teilen 40 Gew.-%iger HF und 66 Teilen Wasser an. Die Ätzung erfolgt laut G. Petzow mit 12 bis 30 Volt gegen eine Pt-Kathode. Bei der elektrochemischen Ätzung des Niobs wurde bei der anodischen Auflösung in HF keine Passivierung beschrieben, wie sie bei manchen Metallen in bestimmten Ätzmitteln auftritt. Beim elektrochemischen Ätzen von Tantal bei einer Stromdichte größer 1 A/dm² bildet sich hingegen eine Schicht von H₂TaF₇ aus, die die weitere Auflösung behindert und die Badspannung erhöht.

Nachteilig bei den beschriebenen nasschemischen Verfahren ist der intensive Angriff der verwendeten Ätzlösungen auf die Photolack-Maske, der die Strukturierung von Schichten aus Niob und Tantal mit einer Dicke deutlich größer als 10 µm ausschließt. Formteile entsprechender Dicke werden aber beispielsweise für die Herstellung von Niob- oder Tantalanoden benötigt. Ein weiterer Nachteil besteht darin, dass beim Einsatz der beschriebenen Ätzlösungen Einzelkristallite freigelegt werden, was eine sehr raue Oberfläche an den geätzten Stellen bedingt.

Aufgabe der vorliegenden Erfindung ist es daher, ein Verfahren zum Ätzen von Formteilen aus Niob und Tantal anzugeben, das die genannten Nachteile nicht aufweist und es insbesondere ermöglicht, Formteile mit Dicken größer 50 µm herzustellen.

Die Aufgabe wird durch eine elektrochemische Behandlung von Niob und Tantal in einer Ätzlösung gelöst, wobei die Ätzlösung neben Flusssäure ein wasserlösliches Polymer enthält und während des Ätzens spezielle elektrochemische Bedingungen eingestellt werden.

Gegenstand der Erfindung ist daher ein Verfahren zur Herstellung von Formteilen aus Niob oder Tantal durch elektrochemisches Ätzen eines mit einer strukturierten Photolackmaske überzogenen Niob- oder Tantalbleches in einer Flusssäure enthaltenden wässrigen Ätzlösung, wobei das Ätzen unter elektrochemischen Bedingungen erfolgt, bei denen der sich einstellende Ätzstrom von einem Rauschen überlagert wird, dessen mittlere Schwankungsbreite 5 - 10% des absoluten Ätzstromes beträgt und wobei die Ätzlösung ein in Wasser lösliches Polymer enthält.

Unter diesen Bedingungen wird überraschend eine weitgehend gleichmäßige Ätzrate an allen nicht vom Photolack bedeckten Stellen erhalten und eine glatte Ätzfläche erzeugt. Der Angriff des Ätzmittels auf die Photoresist-Maske ist so gering, dass sie den gesamten Ätzvorgang ohne Beeinträchtigung übersteht. Es kann daher problemlos über einen längeren Zeitraum, beispielsweise für bis zu 20 Minuten geätzt werden, so dass beispielsweise Niob- oder Tantalbleche einer Dicke von etwa 70 µm vollständig durchgeätzt werden können.

Erfindungsgemäß enthält die Ätzlösung ein wasserlösliches Polymer. Als wasserlöslich werden dabei Polymere verstanden, die sich bei einer Temperatur von 20°C mindestens in einer Konzentration von 100 g/l in Wasser lösen. Als geeignete wasserlösliche Polymere seien beispielsweise Polyethylenglykol, Polyethylenglykolether und deren substituierte Abkömmlinge wie beispielsweise Triton®X-100, und Polypropylenglykol genannt. Vorzugsweise wird als wasserlösliches Polymer Polyethylenglykol eingesetzt.

Im erfindungsgemäßen Verfahren kann Polyethylenglykol mit einer mittleren Molmasse M_{w} von mindestens 100 g/mol bis hin zu den höchsten verfügbaren Molmassen von etwa 35 000 g/mol, die noch eine Löslichkeit in Wasser erlauben, eingesetzt werden. Vorzugsweise werden Polyethylenglykole mit einer mittleren Molmasse M_{w} von 300 bis 1000 g/mol eingesetzt.

Die optimale Konzentration an wasserlöslichem Polymer hängt sowohl von der mittleren Molmasse des Polymers als auch von der Temperatur und den weiteren Bestandteilen der Ätzlösung ab. Vorzugsweise liegt das wasserlösliche Polymer in der Ätzlösung in einer Konzentration von 200 bis 800 g/l, besonders bevorzugt 400 bis 600 g/l vor.

Die im erfindungsgemäßen Verfahren eingesetzte wässrige Ätzlösung enthält Flusssäure. Vorzugsweise beträgt die Konzentration an Flusssäure in der Ätzlösung von 100 bis 500 g/l, bezogen auf reines HF, insbesondere bevorzugt 150 bis 300 g/l.

Vorteilhaft wird der Ätzlösung weiterhin Ammoniumhydrogenfluorid (NH₄)HF₂ zugesetzt. Die Konzentration an Ammoniumhydrogenfluorid beträgt vorzugsweise von 10 bis 100 g/l, insbesondere bevorzugt 30 bis 60 g/l. Dadurch wird eine längere Einsatzdauer der Ätzlösung bei sonst unveränderten Ätzeigenschaften ermöglicht.

Vorteilhaft wirkt sich auch eine erhöhte Temperatur in der Ätzlösung auf den Ätzvorgang aus. Die Temperaturerhöhung führt zu einer höheren Ätzrate, gleichbedeutend mit geringerer Prozessdauer und daher geringerer Belastungsdauer des Photoresists. Vorzugsweise beträgt die Temperatur der Ätzlösung beim Ätzen daher von 40 bis 60°C, wobei die Ätzung jedoch auch im gesamten Temperaturbereich von 5 bis 70°C durchgeführt werden kann.

Das Bewegen der Ätzlösung durch mechanische Mittel wie beispielsweise Rühreinrichtungen oder Umpumpen mit einer Umwälzpumpe, oder auch durch Einblasen eines Gases erhöht die Ätzrate und verbessert die Gleichmäßigkeit des Ätzprozesses über die gesamte zu ätzende Oberfläche hinweg. Vorzugsweise wird daher die Ätzlösung durch eine mechanische Einrichtung oder durch Einblasen von Luft oder einem gegenüber dem zu ätzenden Niob- oder Tantalblech und gegenüber der Ätzlösung inerten Gas bewegt.

Vor dem Ätzen wird eine Maske aus einem Photoresist auf das zu ätzende Metall aufgebracht. Es können die üblichen, im Handel erhältlichen Photoresiste eingesetzt werden. Es ist vorteilhaft für die Haftung der Maske auf dem Metall, wenn die Beschichtung des Metalls durch Ziehen aus dem flüssigen Resist vorgenommen wird und die Maske nach dem Trocknen bei erhöhter Temperatur gehärtet wird.

Erfindungsgemäß erfolgt das Ätzen von Niob und Tantal unter elektrochemischen Bedingungen, bei denen der Ätzstrom von starkem Rauschen überlagert ist. Das elektrochemische Potenzial des als Anode geschalteten zu ätzenden Metalls wird dabei beispielsweise durch die Auswertung von Testätzungen so gewählt, dass der sich ergebende Ätzstrom nach einer Anfangsphase mit nur geringem Rauschen von starkem Rauschen überlagert wird. Unter starkem Rauschen ist dabei ein Rauschen von ca. 5 bis 10 % des absoluten Ätzstroms zu verstehen.

Die elektrochemischen Bedingungen können beispielsweise durch potentiostatische Einstellung des Ätzpotentials oder durch manuelle Einstellung des Ätzstromes realisiert werden.

Das elektrochemische Potenzial des zu ätzenden Niob- oder Tantalbleches kann während des Ätzvorgangs mit einem Potentiostaten gegen eine im Ätzgefäß nahe der Oberfläche des Niob- oder Tantalbleches befindliche Bezugselektrode eingestellt werden.

Vorteilhaft wird die Ätzung jedoch ohne direkte Messung und Regelung des Ätzpotentials unter Verwendung einer gegenüber einem Potentiostaten kostengünstigeren regelbaren Gleichstromquelle erreicht. Dazu wird zunächst an Testsubstraten mittels eines Potentiostaten und einer Bezugselektrode eine Strom-Zeit-Kurve ermittelt, bei der der Ätzvorgang optimal abläuft. Anschließend wird der Strom mittels der Gleichstromquelle so geregelt, dass die Strom-Zeit-Kurve an den zuvor ermittelten optimalen Kurvenverlauf angepasst ist.

Vorzugsweise wird die ermittelte Strom-Zeit-Kurve auch zur Festlegung des Zeitpunkts verwendet, zu dem der Ätzvorgang abgebrochen wird. Je nach Ätzstruktur und erreichter Ätztiefe zeigt die Kurve einen charakteristischen Verlauf, aus dem anhand von empirisch ausgewerteten Kurven von Testätzungen der jeweils angestrebte Endzustand erkannt werden kann.

Kleine Formteile lassen sich kostengünstig in größerer Anzahl gleichzeitig aus einem Niob- oder Tantalblech herausätzen, wenn die Maske aus Photolack so gestaltet wird, dass durch schmale Photolackstege in den Trennstreifen die mechanische und elektrische Verbindung zwischen den kleinen Formteilen bis zum Ende des Ätzens erhalten bleibt und nach dem Ätzen eine mechanische Vereinzelung vorgenommen wird.

Vorzugsweise wird das Niob- oder Tantalblech, aus dem die gewünschten Formteile herausgeätzt werden sollen, so in die Ätzlösung eingetaucht, dass die nicht mit Photolack bedeckten Streifen, die die Formteile begrenzen und die beim Ätzen aufgelöst werden sollen, in einem Winkel von 45° ± 5° zur Senkrechten angeordnet sind.

In einer besonderen Ausführungsform des erfindungsgemäßen Verfahrens werden auf dem zu ätzenden Metall in der Photoresist-Maske neben den zur Vereinzelung notwendigen Strukturen zusätzlich ein oder mehrere Testfelder aufgebracht. Diese können unterschiedliche Teilstrukturen aufweisen, wie sie bei den Formteilstrukturen ebenfalls vorkommen, beispielsweise Kreuzungspunkte, Stege oder gerade Streifen. Die Anordnung der Testfelder gegenüber der Senkrechten kann variiert werden. In einer Testreihe werden die Bedingungen für ein gewünschtes optimales Ätzergebnis eingestellt und dabei der Ätzzustand der Testfelder ermittelt. Folgende Ätzvorgänge können dann auf sehr einfache Weise zum optimalen Zeitpunkt abgebrochen werden, sobald der vorher festgelegte Zustand des Testfeldes erreicht wird. Dies kann beispielsweise optisch festgestellt werden.

Gegenstand der Erfindung sind weiterhin Formteile aus Niob oder Tantal, erhältlich nach dem erfindungsgemäßen Verfahren, die sich von mechanisch hergestellten Formteilen durch ihre glatten und gratfreien Ränder unterscheiden.

Die Erfindung wird nachfolgend anhand von Beispielen näher erläutert, wobei die Beispiele das Verständnis des erfindungsgemäßen Prinzips erleichtern sollen, und nicht als Einschränkung desselben zu verstehen sind.

### Beispiele

### Beispiel 1

Ein Niobblech von 70 µm Dicke und einer Fläche von 100 x 100 mm² wurde durch einen üblichen fotolitografischen Prozess mit einer 3-4 µm dicken Maske des Resists XAR P 5900/4 der Firma Allresist GmbH Berlin versehen, wobei die Beschichtung beidseitig durch Ziehen des Bleches mit konstanter Geschwindigkeit aus dem flüssigen Resist erfolgte. Auf einer Seite des Bleches wurden mehrere Formteile durch resistfreie Streifen von 100 µm Breite markiert, die zueinander im rechten Winkel angeordnet waren. Die Streifen wiesen Unterbrechungen von 200 µm Breite in Abständen von 5 mm auf, die vom Resist bedeckt blieben. Die Maske wurde vor dem Ätzen in einem Umluftofen bei 150°C 60 min gehärtet.

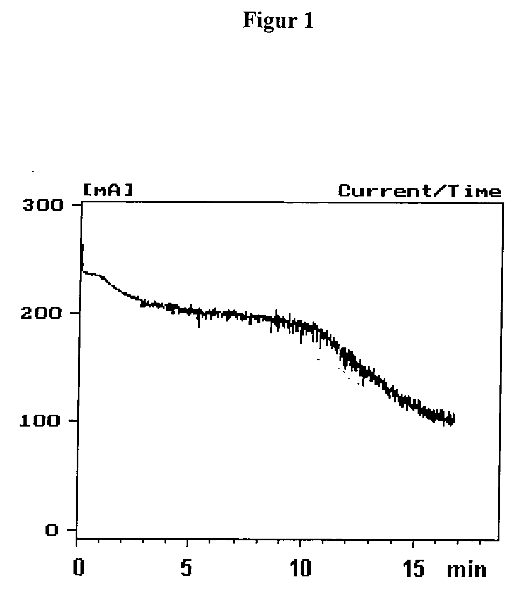

Das Ätzen erfolgte in einem gegen Flusssäure beständigen Gefäß aus Polypropylen, wobei sich das Niobblech mit der Maske in senkrechter Lage und in 2 cm Abstand von einer gleich großen Elektrode aus Platin befand und die strukturierte Seite dieser Elektrode zugewandt war. Die nicht mit dem Resist bedeckten Streifen der Struktur, die die einzelnen Formteile begrenzten, waren in einem Winkel von 45° zur Senkrechten angeordnet. Das Ätzgefäß enthielt ein Gemisch von 400 ml Flusssäure von 50 Masse-%, 600 ml Polyethylenglykol der Molmasse 400 g/l und 50 g Ammoniumhydrogenfluorid NH₄•HF₂. Die Lösung hatte eine Temperatur von 45°C. Im Ätzgefäß befand sich weiterhin eine gegen Flusssäure beständige Referenzelektrode mit einem elektrochemischen Potenzial von 203 mV gegen die Normalwasserstoffelektrode. Das Niobblech, die Platinelektrode und die Referenzelektrode wurden elektrisch mit den Ausgängen eines üblichen Potentiostaten verbunden, wobei das Niobblech als Arbeitselektrode geschaltet war. Dem Niob wurde ein Potenzial von 1800 mV gegen die Referenzelektrode aufgeprägt und der sich einstellende Ätzstrom mit einer üblichen Einrichtung als Funktion der Zeit registriert. Fig. 1 zeigt eine so erhaltene Stromzeit-Kurve mit einem anfänglichen Einschwingen in das Rauschen des Stromes, gefolgt von einem Plateau mit geringer Neigung und einem stärker abfallenden Teil. Letzterer biegt am Ende der dargestellten Kurve erneut in ein flacheres Gebiet ein. Das Ätzen wurde an diesem Punkt unterbrochen und die Maske nach dem Spülen und Trocknen mit einem Stripper entfernt.

An den nicht vom Resist bedeckten Streifen war das Metall bis zur Gegenseite durchgeätzt mit einer seitlichen Unterätzung von 63 µm. Die durch das Ätzen entstandenen Flächen, die die Formteile seitlich begrenzen, hatten eine glatte Oberfläche und die Kanten waren scharf ausgebildet. Die Formteile wurden durch Brechen der verbliebenen Verbindungsstege vereinzelt.

### Beispiel 2

Das Beispiel 2 entspricht dem Beispiel 1, wobei die Formteile auf beiden Seiten des Niobbleches deckungsgleich in der Resistmaske markiert waren und zwei Gegenelektroden verwendet wurden, die miteinander elektrisch verbunden waren. Die Ätzdauer verringerte sich auf die Hälfte, ebenso die Unterätzung.

### Beispiel 3 (Vergleichsbeispiel)

Das Beispiel entspricht den Beispielen 1 und 2, wobei das Potenzial 1200 mV gegen die Referenzelektrode betrug. Die Strom-Zeit-Kurve zeigte kein wesentliches Rauschen und anstelle des Abfalls des Stromes trat nach wenigen Minuten ein deutlicher Anstieg auf. Nach dem Abbruch des Ätzens und der Entfernung der Maske war das Niobblech nicht bis zur Gegenseite durchgeätzt, die Ätzflächen zeigten eine hohe Rauhigkeit und die Ränder waren unscharf ausgebildet. Es sind flächenhafte Ätzangriffe an Stellen, die anfänglich von der Maske bedeckt waren, entstanden.

### Beispiel 4

Das Beispiel entspricht den Beispielen 1 und 2, wobei das Niobblech so in das Ätzgefäß eingetaucht war, dass die resistfreien Streifen waagerecht und senkrecht angeordnet waren. Nach dem Ätzen war an den senkrechten Streifen das Metall bis zur Gegenseite durchgeätzt, während die waagerechten noch Metallreste enthielten.

### Beispiel 5

Das Beispiel entspricht dem Beispiel 4, wobei während des Ätzens die Ätzlösung durch eine Rühreinrichtung in lebhafte mechanische Bewegung versetzt wurde. An den nicht vom Resist bedeckten Streifen war das Metall bis zur Gegenseite durchgeätzt mit einer seitlichen Unterätzung von 60 µm. Die durch das Ätzen entstandenen Flächen, die die Formteile seitlich begrenzen, hatten eine glatte Oberfläche und die Kanten waren scharf ausgebildet.

### Beispiel 6

Das Beispiel entspricht dem Beispiel 4, wobei während des Ätzens die Ätzlösung durch Einblasen von Luft in Form feiner Bläschen in lebhafte mechanische Bewegung versetzt wurde. An den nicht vom Resist bedeckten Streifen war das Metall bis zur Gegenseite durchgeätzt mit einer seitlichen Unterätzung von 58 µm. Die durch das Ätzen entstandenen Flächen, die die Formteile seitlich begrenzen, hatten eine glatte Oberfläche und die Kanten waren scharf ausgebildet.

### Beispiel 7

Das Beispiel entspricht den Beispielen 1 und 2, wobei anstelle des Potentiostaten eine Gleichstromquelle verwendet wurde, die so angesteuert wurde, dass die Stromkurve der in Beispiel 1 entsprach. Die Ergebnisse entsprachen denen des Beispiels 1.

### Beispiel 8

Das Beispiel entspricht Beispiel 1, wobei auf dem zu ätzenden Metall in der Resistmaske zusätzlich mehrere Testfelder mit unterschiedlichen Teilstrukturen, die bei den Formteilstrukturen ebenfalls vorkommen, wie Kreuzungspunkte, Stege, gerade Streifen, sowohl mit den gleichen Abmessungen wie bei den Formteilen, als auch in größeren oder kleineren Abmessungen sowie in keilförmiger Ausbildung mit gleitender Änderung der Abmessungen angebracht waren. Ferner waren die Richtungen der Teststrukturen gegenüber der Senkrechten variiert. In einer Testreihe wurde der zum optimalen Ätzergebnis gehörige Ätzzustand des Testfeldes ermittelt und der Ätzvorgang bei weiteren Ätzungen zu dem Zeitpunkt unterbrochen, zu dem dieser Zustand des Testfeldes durch optische Beobachtung erkannt wurde.

### Beispiel 9

Das Beispiel entspricht dem Beispiel 8, wobei mehrere Teststrukturen wie beschrieben verwendet wurden, die gleichzeitig und in elektrischer Verbindung mit dem zu ätzenden Werkstück unter sonst gleichen Bedingungen wie dieses geätzt wurden und zur Beobachtung aus dem Ätzbad entnommen wurden. In einer Testreihe wurde der zum optimalen Ätzergebnis gehörige Ätzzustand des Testfeldes ermittelt und der Ätzvorgang bei weiteren Ätzungen zu dem Zeitpunkt unterbrochen, zu dem dieser Zustand des Testfeldes durch optische Beobachtung erkannt wurde.

## Patentansprüche

1. Verfahren zur Herstellung von Formteilen aus Niob oder Tantal durch elektrochemisches Ätzen eines mit einer strukturierten Photolackmaske überzogenen Niob- oder Tantalbleches in einer Flusssäure enthaltenden wässrigen Ätzlösung, **dadurch gekennzeichnet, dass** das Ätzen unter elektrochemischen Bedingungen erfolgt, bei denen der sich einstellende Ätzstrom von einem Rauschen überlagert ist, dessen mittlere Schwankungsbreite 5-10% des absoluten Ätzstromes beträgt und die Ätzlösung ein in Wasser lösliches Polymer enthält.

2. Verfahren nach Anspruch 1, **dadurch gekennzeichnet, dass** es sich bei dem Polymer um Polyethylenglykol mit einer mittleren Molmasse M_{w} von mindestens 100 g/mol handelt.

3. Verfahren nach einem der Ansprüche 1 bis 2, **dadurch gekennzeichnet, dass** die Ätzlösung das Polymer in einer Konzentration von 200 bis 800 g/l enthält.

4. Verfahren nach einem der Ansprüche 1 bis 3, **dadurch gekennzeichnet, dass** die Ätzlösung die Flusssäure in einer Konzentration von 100 bis 500 g/l enthält.

5. Verfahren nach einem der Ansprüche 1 bis 4, **dadurch gekennzeichnet, dass** die Ätzlösung Ammoniumhydrogenfluorid in einer Konzentration von 10 bis 100 g/l enthält.

6. Verfahren nach einem der Ansprüche 1 bis 5, **dadurch gekennzeichnet, dass** die Temperatur der Ätzlösung beim Ätzen von 5 bis 70°C beträgt.

7. Verfahren nach einem der Ansprüche 1 bis 6, **dadurch gekennzeichnet, dass** die Ätzlösung durch eine mechanische Einrichtung oder durch Einblasen von Luft oder einem gegenüber dem zu ätzenden Niob- oder Tantalblech und gegenüber der Ätzlösung inerten Gas bewegt wird.

8. Verfahren nach einem der Ansprüche 1 bis 7, **dadurch gekennzeichnet, dass** das elektrochemische Potenzial des zu ätzenden Niob- oder Tantalbleches mit einem Potentiostaten gegen eine im Ätzgefäß nahe der Oberfläche des Nioboder Tantalbleches befindlichen Bezugselektrode eingestellt wird.

9. Formteile aus Niob oder Tantal, erhältlich nach einem der Ansprüche 1 bis 8.
